(19) Europäisches Patentamt
European Patent Office
Office européen des brevets

(11) **EP 3 339 884 A1**

(12) **EUROPEAN PATENT APPLICATION**

(43) Date of publication:
**27.06.2018 Bulletin 2018/26**

(51) Int Cl.:
***G01S 7/41*** *(2006.01)*

(21) Application number: **17181047.6**

(22) Date of filing: **12.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.12.2016  IN 201641043718**

(71) Applicant: **Airbus Defence and Space GmbH
82024 Taufkirchen (DE)**

(72) Inventors:
• **SANTRA, Avik
712258 Hooghly, West Bengal (IN)**
• **SANTHANAKUMAR, Raja
560048 Bangalore (IN)**

(74) Representative: **Isarpatent
Patent- und Rechtsanwälte Behnisch Barth
Charles
Hassa Peckmann & Partner mbB
Friedrichstrasse 31
80801 München (DE)**

(54) **A METHOD AND APPARATUS FOR IDENTIFYING A TARGET**

(57)    An apparatus (1) for identification of a target, said apparatus (1) comprising a processing unit (3) adapted to classify the target (2) on the basis of atomic scatter response signals reflected by scatter target components (SCC) of said target (2) in response to a sensing signal (SS).

Fig. 1

EP 3 339 884 A1

**Description**

The method relates to a method and apparatus for identifying a target, in particular a moving target such as an aeroplane.

The identification and tracking of a target from an observed return signal is a requirement for active sensing applications. The identification of a target becomes a challenge in a complex environment with fluctuating targets or for a target embedded in a dense clutter environment. A common technique for identification of a target such as aircraft is the use of transponders carried by the target. For instance, civilian aircrafts use a technique called secondary surveillance radar SSR. However, if the transponder does not function or is turned off the target cannot be identified. Consequently, non-cooperative target identification techniques for classification and/or identification of targets have been developed using for instance high resolution radar return signals. Non-cooperative target recognition techniques do not require an active participation of the target. Instead, they rely on sensor measurements to independently obtain information on the target. The goal of non-cooperative target recognition techniques is to infer a target type from the measurements using pattern recognition. A high resolution radar HRR can resolve a target into a number of scattering centers depending on the range extent of the target, on the range resolution capabilities of the radar system and its operating frequency. These discrete scattering centers of a so-called range-spread target occupies several range cells in the radar return signals. Measured data of scale target models can be represented in terms of scattering centers, respectively, at a predetermined frequency band. These discrete scatterers can include for instance engine mounts, engine inlets, stabilizers, wing joints, wing edges of an aircraft. The reconstruction of a target vector from a received vector of a received signal is known as a target linear inverse problem in radar technology and can be achieved for instance through a L2 regularized cost function. However, reconstructing the target vector in this conventional way requires a lot of computation resources and is time-intensive. The processing of the return signal can cause a delay which deteriorates the reaction time of the identification system.

Accordingly, it is an object of the present invention to provide a method and apparatus which requires less processing resources and which reduces a time delay in identifying a target.

This object is achieved according to a first aspect of the present invention by a method comprising the features of claim 1.

The invention provides according to a first aspect of the present invention a method for identifying a target wherein the method comprises classifying the target on the basis of atomic scatter response signals reflected by scatterers' target components of said target in response to a sensing signal.

In a possible embodiment of the method according to the first aspect of the present invention, a spatial distribution of characteristic atomic scatter response signals of specific scatter target components of said target within a spatial grid of a space around the target is evaluated to classify the respective target.

In a further possible embodiment of the method according to the first aspect of the present invention, the method comprises the steps of:

receiving a channel modified target response signal from a channel including the target in response to the transmitted sensing signal,
estimating a channel response of the channel from the received channel modified target response signal,
extracting atomic scatter response signals from the estimated channel response of said channel and
matching the extracted atomic scatter response signals with template scatterers stored in a memory to classify the target.

In a possible embodiment of the method according to the first aspect of the present invention, the transmitted sensing signal comprises a radar signal.

In a further possible embodiment of the method according to the first aspect of the present invention, the transmitted sensing signal comprises a sonar signal.

In a still further possible embodiment of the method according to the first aspect of the present invention, the transmitted sensing signal comprises a laser signal.

In a further possible embodiment of the method according to the first aspect of the present invention, the transmitted sensing signal comprises a magnetic signal.

In a still further possible embodiment of the method according to the first aspect of the present invention, the transmitted sensing signal comprises a thermal signal.

In a further possible embodiment of the method according to the first aspect of the present invention, matching of the extracted atomic scatter response signals with the template scatterers is performed by correlating the extracted atomic scatter response signals with template scatterers stored in the memory.

In a still further possible embodiment of the method according to the first aspect of the present invention, template scatterers are translated and/or rotated until a best match result is found.

In a still further possible embodiment of the method according to the first aspect of the present invention, matching of the extracted atomic scatter response signals with the template scatterers comprises counting scatter response signals reflected by the scatter target components of the target having the same canonical structure.

In a still further possible embodiment of the method according to the first aspect of the present invention, count numbers of counted scatter response signals reflected by scatter target components of the target having the same canonical structure are evaluated to classify the target.

In a further possible embodiment of the method according to the first aspect of the present invention, atomic scatter response signals are extracted from the estimated channel response using a predefined dictionary matrix containing all possible atomic scatter response signals to represent the target as a cloud of scatterers.

In a still further possible embodiment of the method according to the first aspect of the present invention, a target scatter vector is estimated as follows:

$$\hat{s} = argmin \parallel h - A \cdot s \parallel_2 + \mu \cdot \parallel s \parallel_1 ,$$

wherein

    A is the dictionary matrix,
    h is the channel response of the channel,
    $\mu$ is a sparsity parameter of the target scatter vector and
    $\parallel \parallel$ is a norm.

In a further possible embodiment of the method according to the first aspect of the present invention, the atomic scatter response signals comprise characteristic signals reflected by scatter target components of the target in response to the transmitted sensing signal.

In a further possible embodiment of the method according to the first aspect of the present invention, each target and each scatter target component comprise a specific shape including a flat plate, a top hat, a trihedral corner reflector, a dihedral corner reflector, a cylinder or a sphere.

In a still further possible embodiment of the method according to the first aspect of the present invention, control signals are generated automatically depending on the classified target.

The invention further provides according to a second aspect an apparatus for identification of a target, comprising the features of claim 14.

The invention provides according to the second aspect an apparatus for identification of a target, said apparatus comprising

a processing unit adapted to classify the target on the basis of atomic scatter response signals reflected by scatter target components of said target in response to a sensing signal.

In a possible embodiment of the apparatus according to the second aspect of the present invention, the processing unit is adapted to evaluate a spatial distribution of characteristic atomic scatter response signals of specific scatter target components of the target within a spatial grid of a space around the target to classify the respective target.

In a possible embodiment of the apparatus according to the second aspect of the present invention, the apparatus further comprises a transmitting unit adapted to transmit the sensing signal comprising a radar signal, a sonar signal, a laser signal, a magnetic signal and/or a thermal signal and a receiving unit adapted to receive a channel modified target response signal from a channel including the target in response to the transmitted sensing signal.

In a still further possible embodiment of the apparatus according to the second aspect of the present invention, the processing unit is adapted to estimate a channel response of said channel from the received channel modified target response signal, to extract atomic scatter response signals from the estimated channel response of the channel and to match the extracted atomic scatter response signals with template scatterers stored in a memory of said apparatus to classify the target.

In the following, possible embodiments of the different aspects of the present invention are described in more detail with respect to the enclosed figures.

Fig. 1    shows a block diagram for illustrating a possible exemplary embodiment of an apparatus for identification of a target according to an aspect of the present invention;

Fig. 2    shows a flowchart of a possible exemplary embodiment of a method for identifying a target according to a further aspect of the present invention;

Fig. 3    shows a diagram for illustrating a further possible embodiment of a method and apparatus for identifying a target;

Fig. 4     shows a further diagram for illustrating a further possible exemplary embodiment of a method and apparatus for identifying a target;

Fig. 5     shows a block diagram for illustrating a further possible exemplary embodiment of a method and apparatus for identifying a target;

Fig. 6     shows a further diagram for illustrating a possible exemplary embodiment of a method and apparatus for identifying a target.

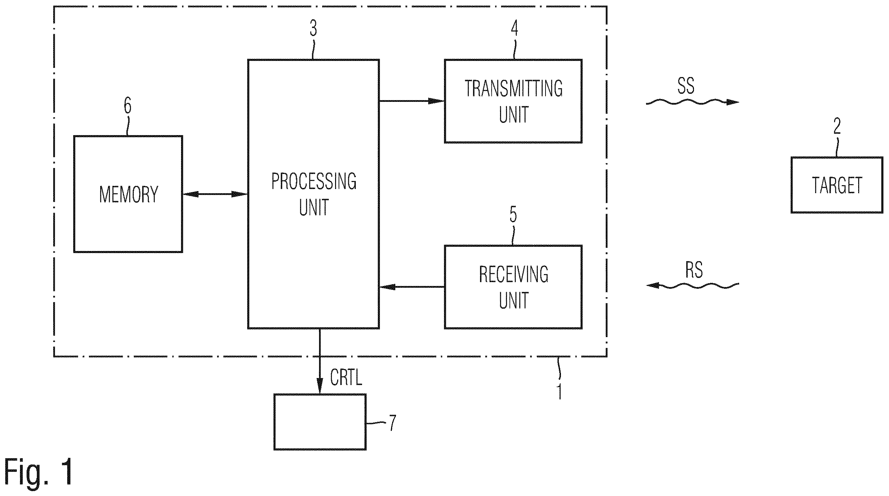

An exemplary embodiment of an apparatus 1 for identification of a target 2 is illustrated in the block diagram of Fig. 1. In the illustrated embodiment of Fig. 1, the apparatus 1 for identification of the target 2 comprises a processing unit 3 connected to a transmitting unit 4 and a receiving unit 5. The processing unit 3 is adapted to classify the target 2 on the basis of atomic scatter response signals reflected by scatter target components of the target 2 in response to a sensing signal SS. In the illustrated embodiment of Fig. 1, the apparatus 1 for identification of the target 2 comprises a transmitting unit 4 and a receiving unit 5. In the embodiment illustrated in Fig. 1, the transmitting unit 4 and the receiving unit 5 are integrated in the same apparatus. In an alternative embodiment, the transmitting unit 4 and the receiving unit can be located at different locations.

The transmitting unit 4 of the apparatus 1 is adapted to transmit a sensing signal SS. The receiving unit 5 of the apparatus 1 is adapted to receive a response signal RS reflected from the target 2. The receiving unit 5 supplies the response signal RS to the processing unit 3 of the apparatus 1. The processing unit 3 of the apparatus 1 can classify the target 2 on the basis of atomic scatter response signals reflected by different scatter target components of the target 2 in response to the sensing signal SS transmitted by the transmitting unit 4. In a possible embodiment, the processing unit 3 is adapted to evaluate a spatial distribution of characteristic atomic scatter response signals of specific scatter target components of the target 2 within a spatial grid of a space around the target 2 to classify the respective target 2.

The target 2 can be a moving target, for instance a flying object such as an aircraft. The target 2 forms part of a channel between the transmitting unit 4 and the receiving unit 5. The sensing signal SS transmitted by the transmitting unit 4 is modified by the channel. The receiving unit 5 of the apparatus 1 is adapted to receive a channel modified target response signal from the channel including the target 2 in response to the transmitted sensing signal SS transmitted by the transmitting unit 4. The processing unit 3 of the apparatus 1 is adapted to estimate a channel response of said channel from the received channel modified target response signal RS to extract atomic scatter response signals from the estimated channel response of the channel and to match the extracted atomic scatter response signals with template scatterers stored in a memory 6 of said apparatus 1 to classify the target 2.

In a possible embodiment, the processing unit 3 is adapted to generate automatically control signals CRTL depending on the classified target 2. The generated control signals CRTL can be used for controlling an actuator 7 as illustrated in Fig. 1. The classified target 2 can also be notified via a network to a remote control center.

The sensing signal SS transmitted by the transmitting unit 4 of the apparatus 1 can comprise a radar signal, a sonar signal, a laser signal, a magnetic signal or a thermal signal. In a possible embodiment, the processing unit 3 is adapted to match the extracted atomic scatter response signals with the template scatterers read from the memory 6 by correlating the extracted atomic scatter response signals with the template scatterers read from the memory 6. In a possible specific embodiment, the template scatterers read from the memory 6 can be translated and/or rotated by the processing unit 3 until a best match result is found.

In a possible embodiment, the matching of the extracted atomic scatter response signals with the template scatterers read from the memory 6 can comprise counting of scatter response signals reflected by the scatter target components of the target 2 having the same canonical structure. The count numbers of the counted scatter response signals reflected by the scatter target components of the target 2 having the same canonical structure are then evaluated by the processing unit 3 to classify the target 2.

In a possible embodiment, the processing unit 3 is adapted to extract atomic scatter response signals from the estimated channel response using a predefined dictionary matrix A containing all possible atomic scatter response signals to represent the target 2 as a cloud of scatterers. In a possible embodiment, the predefined dictionary matrix A can also be stored in the memory 6 or in a separate memory of the apparatus 1. In a possible embodiment, the target scatter vector s can be estimated by the processing unit 3 as follows:

$$\hat{s} = argmin \ \| h - A \cdot s \|_2 + \mu \cdot \| s \|_1 \ ,$$

wherein

A        is the dictionary matrix,

h        is the channel response of the channel including the target 2,

μ        is a sparsity parameter of the target scatter vector and

|| ||        is a norm.

The atomic scatter response signals are reflected by different scattered target components of the target 2 in response to the transmitted sensing signal SS. The scatter target components are scattering centers which may for instance include engine mounts, engine inlets, stabilizers, wing joints or wing edges of an aircraft target. Each target 2 such as an aircraft and each scatter target component such as an aircraft component can comprise a specific shape. A specific shape can for instance include a flat plate, a top hat, a trihedral corner reflector, a dihedral corner reflector, a cylinder or a sphere. Further, there may be more different canonical structures or shapes for scatter target components of a target 2.

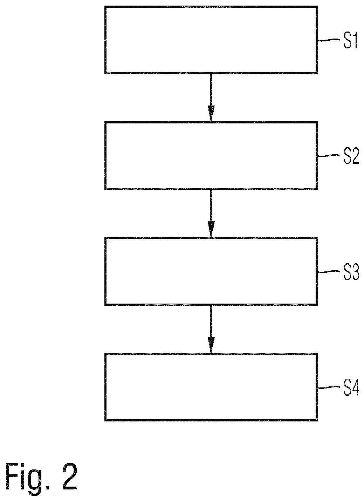

Fig. 2 shows a flowchart of a possible exemplary embodiment of a method for identifying a target 2 such as an aircraft. The target 2 is classified on the basis of atomic scatter response signals reflected by the scatterers' target components in response to a sensing signal SS. A spatial distribution of characteristic atomic scatter response signals of specific scatter target components of the target 2 within a spatial grid of a space around the target is evaluated to classify the respective target 2. In the illustrated embodiment of Fig. 2, in a first step S1, a channel modified target response signal RS is received from a channel including the respective target 2 in response to a transmitted sensing signal SS. The channel modified target response signal RS may for instance be received by a receiving unit 5 of an apparatus 1 as illustrated in Fig. 1. The channel between the transmitting unit 4 and the receiving unit 5 can comprise at least one target 2. The sensing signal SS transmitted by the transmitting unit 4 is modified by the channel to provide a channel modified target response signal which can be received by the receiving unit 5 of an apparatus 1.

In a further step S2, a channel response h of the channel is estimated from the received channel modified target response signal RS.

In a further step S3, atomic scatter response signals are extracted from the estimated channel response of the channel.

Finally in step S4 a matching of the extracted atomic scatter response signals with template scatterers stored in a memory is performed to classify the target 2. The matching of the extracted atomic scatter response signals with the template scatterers in step S4 can be performed in a possible embodiment by correlating the extracted atomic scatter response signals with template scatterers read from a memory. In a possible embodiment, the template scatterers read from a memory can be translated and/or rotated until a best match result is found.

In a possible embodiment, the matching of the extracted atomic scatter response signals with the template scatterers in step S4 can comprise counting scatter response signals reflected by scatter target components of the target 2 having the same canonical structure. In a possible embodiment, the count numbers of counted scatter response signals reflected by the scatter target components of the target 2 having the same canonical structure can be evaluated to classify the respective target 2.

In a possible embodiment of the method illustrated in Fig. 2, the atomic scatter response signals can be extracted in step S3 from the estimated channel response using a predefined dictionary matrix A containing all possible atomic scatter response signals to represent the respective target as a cloud of scatterers.

In a possible embodiment of the method illustrated in Fig. 2, the target scatter vector S is estimated as follows:

$$\hat{s} = argmin \ \| h - A \cdot s \|_2 + \mu \cdot \| s \|_1 \ ,$$

wherein

A        is the dictionary matrix,

h        is the channel response of the channel,

μ        is a sparsity parameter of the target scatter vector s and

|| ||        is a norm.

In the method illustrated in Fig. 2, the target 2 is classified by matching the extracted atomic scatter response signals with template scatterers read from a memory in step S4. The classified target can be notified to a remote control center. Further, it is possible to generate automatically control signals CRTL depending on the classified target 2. These control signals CRTL can be supplied to one or several actuators such as actuator 7 illustrated in Fig. 1. In a further possible embodiment, a communication between the apparatus 1 and the target 2 can be initiated depending on the classification result. For instance, the target 2 can be informed by a separate communication signal that it has been successfully classified and/or identified. On the contrary, the target 2 may also be informed that it has not been successfully identified and may identify itself by sending an identification signal.

In the illustrated embodiment of Fig. 1, the channel between the transmitting unit 4 and the receiving unit 5 of the apparatus 1 comprises a single target 2. It is also possible that the channel comprises several targets such as flying aircrafts within a range of a transmitting and/or a receiving unit of the apparatus 1. The target 2 can be any kind of moving targets such as an aircraft, a ship or a vehicle. The method and apparatus 1 illustrated in Figs. 1, 2 can be used for non-cooperative target recognition. The method and apparatus 1 allows to infer a target type of a target from the received response signal.

In the illustrated embodiment of Fig. 1, the apparatus 1 comprises a single transmitting unit 4 and a single receiving unit 5. In an alternative embodiment, more than one transmitting unit 4 and more than one receiving unit 5 can be used to identify the target 2. In a possible embodiment, the different transmitting units 4 and the different receiving units 5 can be located at different locations and be connected to a common processing unit 3.

If a scattering center SCC or a scatter target component of the target 2 has a position ($\tau_k$, $f_k$) in the delay and Doppler space and when designating a backscattering cross section of the scatterer as $\sigma(\tau_k, f_k)$ and the phase of its reflection coefficient as $\theta(\tau_k, f_k)$ the received response signal y, RS from the $k^{th}$ scatterer can be expressed as:

$$\tilde{y}_k^S(t) = Re\left\{\sqrt{\sigma(\tau_k, f_k)}\, e^{j\theta(\tau_k, f_k)} x(t - \tau_k) e^{j2\pi(f_c + f_k)(t - \tau_k)}\right\}$$

$$(1)$$

wherein the transmitted sensing signal SS $f(t)$ which consists of a complex baseband signal $x(t)$ modulating a carrier frequency $f_c$ can be expressed as:

$$f(t) = Re\left\{x(t) e^{j2\pi f_c t}\right\}, \quad -\infty < t < \infty$$

$$(2)$$

When accumulating the return from K scatterers in the distributed target 2 the received signal y can be expressed as:

$$\tilde{y}^S(t) = \sum_{k=1}^{K} \tilde{y}_k^S(t)$$

$$= Re\left\{\sum_{k=1}^{K} \sqrt{\sigma(\tau_k, f_k)}\, e^{j\theta(\tau_k, f_k)} x(t - \tau_k) e^{j2\pi(f_c + f_k)(t - \tau_k)}\right\}$$

$$(3)$$

The complex envelope of the baseband version of the received signal, $y^{s,r}(t)$ can be expressed as:

$$y^{s,r}(t) = \sum_{k=1}^{K} \sqrt{\sigma(\tau_k, f_k)} e^{j\theta(\tau_k, f_k)} x(t - \tau_k) e^{j2\pi f_k(t - \tau_k)}$$

$$(4)$$

without the constant rotation terms, the received response signal y can be compactly expressed as:

$$y(t) = h(t) * x(t) + z(t)$$

$$(5)$$

where * denotes the convolution operation, and $h(t) = \sqrt{\sigma(\tau_k, f_k)} e^{j\theta(\tau_k, f_k)} e^{j2\pi f_k(t - \tau_k)}$ represents the chan-

nel including the distributed range-spread target 2.

A Tx-Rx model of equation (5) can be expressed in matrix form as follows:

$$\underline{y} = X\underline{h} + \underline{z}$$

(6)

where X is a convolution matrix representing the transmitted signal, and N is the number of samples representing the pulse width of the transmitted signal, given as:

$$X = \begin{bmatrix} x(1) & 0 & \dots & 0 \\ x(2) & x(1) & 0 & \dots \\ \vdots & \vdots & \ddots & \\ \dots & x(N) & & x(1) \end{bmatrix} \epsilon\, C^{NxN}$$

(7)

The target vectors $\underline{h}$ and clutter vector $\underline{c}$ can be expressed as:

$$\underline{h} = [h(1) \quad \dots \quad h(L) \quad 0]^T \epsilon\, C^{Nx1}$$

(8)

The target vector $\underline{h}$ represents the sparse but locally dense target with only $L$ ($L << N$) non-zero entries. The target vector $\underline{h}$ can be reconstructed from the received vector $\underline{y}$ for instance by using a cost function as follows:

$$\hat{\underline{h}} = (X^H \Sigma^{-1} X + \Sigma_h^{-1})^{-1} X^H \Sigma_z^{-1} \underline{y}$$

(9)

With the method and apparatus 1 according to the present invention, spatial distribution of canonical scatterers is extracted. In other words, the location and type of different scatterers which cumulatively contribute to the type of response is extracted. Once a spatial distribution of the scatterers has been identified it can be used as a signature of the target 2 for its classification/identification. Further, it can be used for robust target tracking and situation detection.

Modeling of a target such as the target 2 illustrated in Fig. 1 can be performed by modeling the target as a combination of scatterers. This can be done with several asymptotic scattering center models such as a multi-peak model, Prony's model, Geometric Theory of Diffraction GTD and Uniform Theory of Diffraction UTD. These techniques can lead to an imaging model in which the target is considered to be made up of canonical scattering centers SCC that can be used to determine a range profile by asymptotic methods.

A target can be made of N scatterers or target components. In the backscattered field of the $n^{th}$ scattering center SCC can be expressed as:

$$E_n^s(k, \phi, \theta) = \sigma_n h_n(k, \phi, \theta; \Theta_n)\, exp\{j2k\, R_n\}$$

(10)

wherein $k = 2\pi f/c$ is the wave number,
$f$ is the frequency in hertz,
$c$ is the propagation velocity,
$\phi$ is the azimuth aspect angle,
$\theta$ is the elevation aspect angle,
$R_n$ is the down range of the $n^{th}$ scattered center SCC,
$r_n = [x_n, y_n, z_n]$ is the position vector of the $n^{th}$ scattering center SCC.

$\Theta_n$ contains parameters that characterize the $n^{th}$ canonical scattering center SCC. $h_n$ represents the response

of the $n^{th}$ scatterer at the position $R_n$, $\phi$, $\theta$ with given parameters $\Theta_n$. Further, $\sigma_n$ represents the peak RCS of the particular scatterer type.

For fluctuation with frequency f, the backscattered field diffracted from a point on an edge is proportional to $(jk)^{-\frac{1}{2}}$ and the backscattered field E diffracted from a vertex is proportional to $(jk)^{-1}$. In addition to the edge and vertex diffraction, a large class of scattering geometries also fit the $(jk)^{\alpha}$ power dependency on frequency f, where the parameter $\alpha$ has a half integer value. In addition, a flat-surface and singly-curved surface can be characterized by $\alpha = 1$ and $\alpha = 1/2$, respectively. Different scattering mechanisms can comprise different $\alpha$ parameter values. As the aspect angle of the target 2 is varied, it can be assumed that a scattering center SCC of the target 2, i.e. a target component behaves in one of the two following ways. Either a scatterer is localized and appears to exist at a single point in space or it is distributed in the imaging plane and appears as a finite, non-zero-length current distribution. The amplitude dependence on the aspect angle is different for each of the canonical scattering centers SCC.

Examples of localized scattering mechanisms are trihedral reflection, corner diffraction and edge diffraction. All these scattering mechanisms comprise a slowly varying amplitude as a function of the aspect angle. The localized scattering mechanisms can be modeled by a slowly varying function with a damped exponential as follows:

$$h_n(f, \phi, \theta; \Theta_n) = \exp(-j2\pi f v_n \sin(\phi)) \tag{11}$$

The parameter $v_n$ for a localized scatterer ($L_n = 0$) has no direct physical interpretation. On the other hand, examples of distributed scattering mechanisms ($L_n > 0$) comprise flat-plate reflection, dihedral reflection, and cylinder reflection. Each of these scattering mechanisms comprises an amplitude dependence on the aspect angle that contain a $sinc(x)$ function. In a two-dimensional case, where the distributed scattering mechanism rotates only in the $xy$-plane the response $h_n$ to the $n^{th}$ scatterer at the position $R_n$, $\phi$, $\theta$ can be expressed as follows:

$$h_n(f, \phi) = sinc\left(\frac{2\pi f}{c} L_n \sin(\phi - \beta_n) \cos(\theta)\right) \tag{12}$$

where $L_n$ is the length and $\beta_n$ is the orientation angle of the distributed scatterer.

For rotation of the scatterer in the $xy$-plane, the different model terms from the localized and the distributed scattering mechanisms can be combined into a general form as follows:

$$h_n(f, \phi, \theta; \Theta_n)$$
$$= (jk)^{\alpha_n} sinc\left(\frac{2\pi f}{c} L_n \sin(\phi - \beta_n) \cos(\theta)\right) \times \exp(-j2\pi f v_n \sin(\phi))$$
$$\times \exp(j\frac{4\pi f}{c}(x_n \cos(\phi) \cos(\theta) + y_n \sin(\phi) \cos(\theta) + z_n \sin(\theta))) \tag{13}$$

wherein $L_n = 0$ if the scattering center SCC is localized and $v_n = 0$ if the scatterer SCC is distributed. The total scattered field which contributes to the observed target response comprises a superposition of a number $N$ of individual scattering terms.

The scatterer response is a function of frequency, scatterer location $(x_n, y_n, z_n)$, pose angles $(\alpha_n, \beta_n, \gamma_n)$, scatterer size, i.e. length L, height H, radius r $(L_n, H_n, r_n)$ wherein each scattering center SCC can be described by a subset of a parameter set by $(x_n, y_n, z_n, \alpha_n, \beta_n, \gamma_n, L_n, H_n, r_n)$ for $n = 1, 2, \ldots N$.

In a possible exemplary embodiment, one can use six different canonical structures wherein their transfer function is indicated in the following table:

| SI No: | Canonical Structure | $\alpha$ | $\Theta_n$ | Max. RCS |
|--------|---------------------|----------|------------|----------|
| 1 | Flat Plate | 1/2 | $\{x,y,z,\alpha,\beta,\gamma,L,H\}$ | $\sigma_{peak} = \dfrac{4\pi L^2 H^2}{\lambda^2}$ |
| 2 | Top Hat | 1/2 | $\{x,y,z,\alpha,\beta,\gamma,H,r\}$ | $\sigma_{peak} = \dfrac{8\pi r H^2}{\lambda\sqrt{2}}$ |
| 3 | Trihedral Corner Reflector | 1 | $\{x,y,z,\alpha,\beta,\gamma,H\}$ | $\sigma_{peak} = \dfrac{12\pi H^4}{\lambda^2}$ |
| 4 | Dihedral Corner Reflector | 1 | $\{x,y,z,\alpha,\beta,\gamma,L,H\}$ | $\sigma_{peak} = \dfrac{8\pi L^2 H^2}{\lambda^2}$ |
| 5 | Cylinder | 1/2 | $\{x,y,z,\alpha,\beta,\gamma,L,r\}$ | $\sigma_{peak} = \left(\dfrac{2\pi}{\lambda}\right).rL^2$ |
| 6 | Sphere | 0 | $\{x,y,z,r\}$ | $\sigma_{peak} = \pi r^2$ |

In the above table, $\lambda$ indicates the wavelength of a carrier frequency $f_c$.

With the method according to the present invention, any target response of a target 2 is modeled as a superposition of canonical scatterers **Fehler! Verweisquelle konnte nicht gefunden werden.**positioned appropriately. For example, a radar return signal from an aircraft as a target 2 can potentially consist of a cylinder (fuselage) with a specific radius r, a sphere at the nose of the aircraft target, two dihedral corner reflectors representing reflection of engine propellers, two dihedral corner reflectors representing responses from aircraft wings, and two dihedral corner reflectors to represent responses from the aircraft's tail wings. The cylinder comprises a radius being half of the height of the aircraft and having a length corresponding to the length of the aircraft, i.e. the aircraft's fuselage. The distributed canonical structure, i.e. the cylinder, can be orientated at -90° from a wave plane front. For instance, an aircraft target model can comprise dimensions with a length = 37.57m, a width or wing-span of 35.8m and a height of 12m, which is for instance typical for an aircraft of the type Airbus A320. Since an aircraft is usually symmetric, the scattering target model of the aircraft is also symmetric. Further, it can be assumed that a range profile measured at an aspect azimuth angle $\theta$ is identical to the range profile measured at the negative aspect azimuth $-\theta$ (for a fixed aspect elevation ($\phi$)).

In a possible embodiment, a spatial (3D) grid of KxLxM points overlaid on the target of interest is used. Let $p_i = (r_i, \theta_i, \phi_i)$ denote the position of the $i^{th}$ grid point of the spatial grid. To model the target of interest, e.g. the target 2 illustrated in Fig. 1, at any grid point, there can be only one of the canonical scatterers or no canonical scatterer at all. If $\underline{h}_k^i$ is denoted as the response of the $k^{th}$ canonical scatterer as indicated in the above table, $k$ = 1, 2,..., 6 (wherein 1 indicates a flat plate canonical scatterer and ...6 indicates a sphere). A dictionary matrix A can contain all possible scatterer responses $\underline{h}_k^i$ concatenated columnwise and can be indicated as follows:

$$A = [\underline{h}_1^1 \quad \underline{h}_2^1 \quad ... \quad \underline{h}_6^1 \quad ... \quad ... \quad ... \quad \underline{h}_1^{KLM} \quad \underline{h}_2^{KLM} \quad ... \quad \underline{h}_6^{KLM}]$$

$$(14)$$

A is a dictionary matrix with dimensions *NxKLM,* where N is the length of the scatterer's response and KxLxM denotes the total number of discrete points encapsulating the three-dimensional space enclosing the target 2 of interest. Each column of the dictionary matrix A represents the response of a canonical scatterer at a given point with coordinates x,y,z. A value of 1 in the corresponding row in the $\underline{s}$ vector indicates that a response is present in the super-positioned total target response $\underline{h}$. For each of the scatterer types, the maximum RCS $\sigma_n$ parameter is captured within its response

in $\underline{h}_n^i$. A large KLM provides a better resolution and finer description of the canonical scatterers that form the target 2 but at the cost of higher computational complexity.

The overall response of the target $\underline{h}$ can be expressed by the superposition of the individual canonical scatterer responses as follows:

$$\underline{h} = A\underline{s}$$

(15)

wherein vector $\underline{s}$ contains the strength of the each type of canonical scatterer at all points in the spatial grid represented by the KLM discrete points. At any grid point or location $p_i$, only one type of scatterer or no scatterer at all can be present. This implies all the components in vector $\underline{s}$ corresponding to that location to be 0 except for the one canonical scatterer. Such a requirement means that the vector $\underline{s}$ is sparse, i.e. including many zeros, and only few non-zero values corresponding to few scatterers. Since the target response shall be approximated as closely as possible, the dictionary matrix A can comprise an exhaustive dictionary of atomic representations, i.e. standard scatterer structures, across the entire range, elevation angle, azimuth angle encapsulating the target space around the target of interest.

The above equation is solved for the vector $\underline{s}$ given the received signal $\underline{h}$ as follows:

$$\hat{\underline{s}} = argmin_s \left\| \underline{h} - A\underline{s} \right\|_2 + \lambda \left\| \underline{s} \right\|_1$$

(16)

This optimization problem can be solved by any standard L1-based convex optimization technique such as LASSO, L1-LS. The L1 norm in the second term of equation (16) forces the solution x to be sparse. The non-zero terms capture the strength of the scatterer and capture the presence or absence of a particular scatterer type at a location ($r_i$, $\theta_i$, $\phi_i$). The parameter $\lambda$ controls a sparsity of the vector $\underline{s}$. The vector $\underline{s}$ can be used for classification and/or identification of the scatterers or target components which form the target of interest, for instance the target 2 illustrated in Fig. 1.

The method and apparatus 1 according to the present invention are based on a finer model of a target in terms of spatial distributed canonical scatterers. An optimization formulation as proposed by the present invention provides a technique or mechanism to extract the types of canonical scatterers and their spatial distribution. The configuration of the different canonical scatterers, therefore, can be considered as a signature of the respective target 2, and can be used for improved target classification or non-cooperative target identification, tracking, and situation detection.

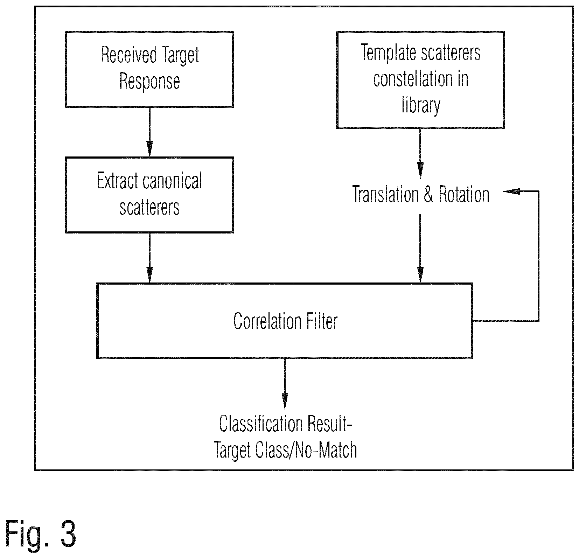

Fig. 3 shows a diagram illustrating a possible architecture for target classification. As illustrated in Fig. 3, a library is provided which can be stored in a database or memory. The library contains several templates of scatterer constellations or configurations for known target types. Giving the observed target response or response signal using an optimization formulation, the canonical scatterers and their spatial distribution or configuration can be extracted and compared or correlated with the templates available in the stored library. To find a best match, the templates of scatterer constellations can be translated and/or rotated as also illustrated in Fig. 3. At the end of a matching process, a decision can be made about the type and/or class of the observed target of interest or alternatively no match result can be found (i.e. an unknown target).

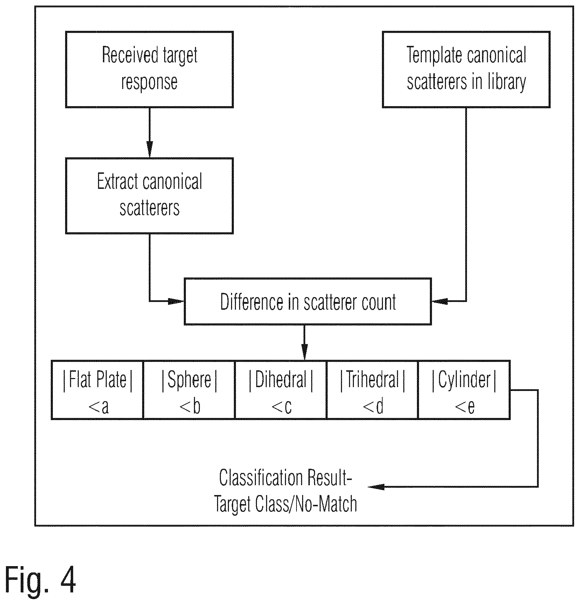

Fig. 4 shows an alternative implementation of a non-cooperative target identification wherein the extracted configuration of the canonical scatterers is compared with templates provided from a stored library. In the illustrated matching process of Fig. 4, a comparison is done only for the number of different types of scatterers between the observed target and the templates, ignoring any spatial information. In the variant illustrated in Fig. 3, the relative positions of scatterers is taken into account, whereas in the variant illustrated in Fig. 4, the spatial information is ignored.

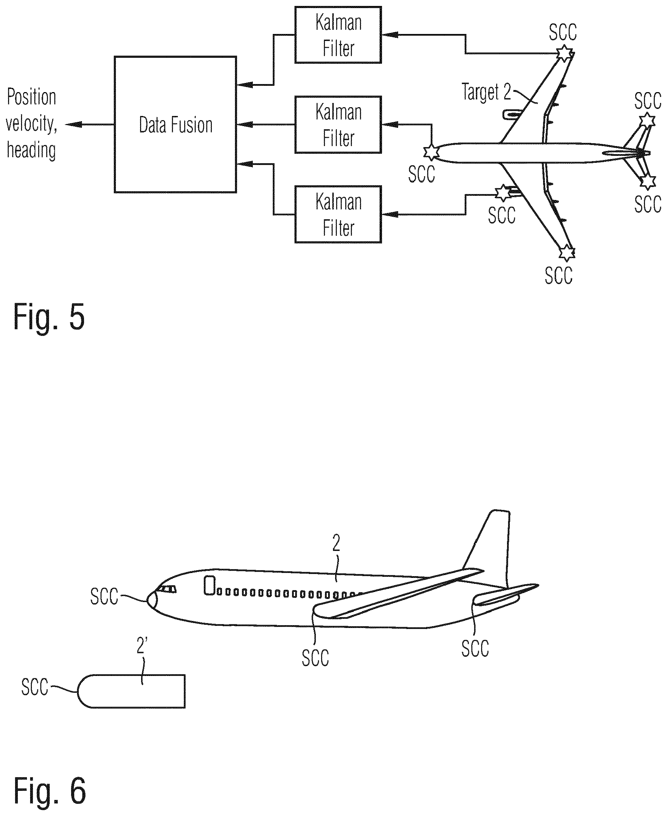

Fig. 5 shows a diagram for illustrating a possible implementation of a target tracking based on the identification method according to the present invention. In the illustrated embodiment, top three scatterers SCC are identified from a configuration of scatterers and tracked with three independent Kalman filters as illustrated in Fig. 5. Identification of top scatterers can for instance be based on a magnitude of signal components. A kinematic state of the identified top scatterers, i.e. position and velocity, are then fused by a data fusion unit to track a target 2 from pulse to pulse. An optimization formulation can consistently identify the strongest three scatterers in spite of fluctuating radar responses, thereby leading to a better tracking of the overall target of interest.

Fig. 6 illustrates a further use case of the method and apparatus 1 for identifying a target. The method and apparatus 1 according to the present invention can be used for detection of specific situations. The method can be used to monitor a target configuration in different situations. For instance, an observed target 2 can split into two separate targets 2, 2' as illustrated in Fig. 6 where additional scattering centers SCC are created. These additional scattering centers or scattering target components can then be detected by the applied dictionary-based approach used by the method according to the present invention. An initial configuration of the targets can be captured and in subsequent pulses, the changed target configuration is compared with the initial information by a comparison module to detect new scatterers in the received signal. Based on the position and type of the new scatterers, a momentary specific situation can be detected. In response to the detected situation, corresponding control signals CRTL can be generated to control actuators which may perform countermeasures for specific situations.

The method and apparatus 1 according to the present invention can be used for specifying and/or identifying a moving object or a target 2. Further, the method and apparatus 1 according to the present invention can be used for target tracking and/or situation detection. Different embodiments of the method and apparatus 1 according to the present invention are possible. In a possible embodiment as illustrated in Fig. 1, the extracted atomic scatter response signals extracted from the estimated channel response of the channel are matched with template scatterers stored in a local memory 6 as illustrated in Fig. 1. In an alternative embodiment, the template scatterers can be read from a remote database connected to the apparatus 1 via a network. In a possible embodiment, several identification apparatuses 1 can be connected to a data network comprising a server having access to a database where template scatterers and/or dictionary matrices A are stored for further processing. In a possible embodiment, the dictionary matrix containing all possible atomic scatter response signals to represent a target of interest as a cloud of scatterers can be updated for a new classified target. In a further possible embodiment, the frequency and/or range of the transmitted sensing signal SS can be adjusted. In a further possible implementation, the method can be performed at different frequencies or different frequency ranges to perform a classification of a target of interest. This can for example be performed to verify a classification performed at a different frequency. In a further possible embodiment, template scatterers can be generated on the basis of measurements performed for a target of a known type. In a preferred embodiment, the method as illustrated in the flowchart of Fig. 2 is performed in real time and can trigger control signals generated automatically depending on the classified targets. The method and apparatus according to the present invention can be used to monitor and control a local area or space such as a local airspace comprising a plurality of different moving targets or aircrafts.

In a further possible implementation, the apparatus 1 for identification of a target can also be implemented in a moving object for identification of other targets. In a possible embodiment, the identification apparatus 1 as illustrated in Fig. 1 can also be provided within a moving target such as an aircraft to identify other targets in the vicinity of the respective aircraft. In a still further possible embodiment, if the apparatus 1 and method are not able to identify a target of interest with a transmitted sensing signal, parameters of the sensing signal are automatically changed in an attempt to still classify the respective targets of interest. For instance, if the sensing signal transmitted by the transmitting unit 4 does not lead to identification of the respective target, a frequency, an amplitude and/or a modulation scheme or a pulse pattern of the transmitted sensing signal can be automatically changed under control of the processing unit 3 in an attempt to classify the target 2 with the changed sensing signal SS.

**Claims**

1. A method for identifying a target,
   wherein the method comprises
   classifying the target (2) on the basis of atomic scatter response signals reflected by scatter target components (SCC) of said target (2) in response to a sensing signal (SS).

2. The method according to claim 1 wherein a spatial distribution of characteristic atomic scatter response signals of specific scatter target components (SCC) of said target (2) within a spatial grid of a space around the target (2) is evaluated to classify the respective target (2).

3. The method according to claim 1 or 2 comprising the steps of:

   - receiving (S1) a channel modified target response signal (RS) from a channel including the target (2) in response to the transmitted sensing signal (SS),
   - estimating (S2) a channel response of the channel from the received channel modified target response signal (RS),
   - extracting (S3) atomic scatter response signals from the estimated channel response of said channel and
   - matching (S4) the extracted atomic scatter response signals with template scatterers stored in a memory (3) to classify the target (2).

4. The method according to any of the preceding claims 1 to 3 wherein the transmitted sensing signal (SS) comprises a radar signal, a sonar signal, a laser signal, a magnetic signal and/or a thermal signal.

5. The method according to claim 3 wherein the matching of the extracted atomic scatter response signals with the template scatterers is performed by correlating the extracted atomic scatter response signals with the template scatterers stored in the memory (3).

6. The method according to claim 5 wherein the template scatterers are translated and/or rotated until a best match result is found.

7. The method according to claim 3 wherein the matching of the extracted atomic scatter response signals with the template scatterers comprises counting scatter response signals reflected by scatter target components (SCC) of the target (2) having the same canonical structure

8. The method according to any of the preceding claims 3 to 7 wherein atomic scatter response signals are extracted from the estimated channel response using a predefined dictionary matrix, A, containing all possible atomic scatter response signals to represent the target as a cloud of scatterers.

9. The method according to any of the preceding claims 1 to 8 wherein a target scatter vector (s) is estimated as follows:

$$\hat{s} = argmin \; \| \, h - A \cdot s \, \|_2 + \mu \cdot \| \, s \, \|_1 \, ,$$

wherein

A is the dictionary matrix,
h is the channel response of the channel,
μ is a sparsity parameter of the target scatter vector and
‖ ‖ is a norm.

10. The method according to any of the preceding claims 1 to 9 wherein the atomic scatter response signals comprise characteristic signals reflected by scatter target components (SCC) of the target (2) in response to the transmitted sensing signal (SS)

11. The method according to any of the preceding claims 1 to 10 wherein control signals (CRTL) are generated automatically depending on the classified target.

12. An apparatus (1) for identification of a target,
said apparatus (1) comprising
a processing unit (3) adapted to classify the target (2) on the basis of atomic scatter response signals reflected by scatter target components (SCC) of said target (2) in response to a sensing signal (SS).

13. The apparatus according to claim 12 wherein said processing unit (3) is adapted to evaluate a spatial distribution of characteristic atomic scatter response signals of specific scatter target components (SCC) of the target (2) within a spatial grid of a space around the target (2) to classify the respective target (2).

14. The apparatus according to claim 12 or 13 further comprising a transmitting unit (4) adapted to transmit the sensing signal (SS) comprising a radar signal, a sonar signal, a laser signal, a magnetic signal and/or a thermal signal and further comprising a receiving unit (5) adapted to receive a channel modified target response signal (RS) from a channel including the target (2) in response to the transmitted sensing signal (SS).

15. The apparatus according to any of the preceding claims 12 to 14 wherein the processing unit (3) is adapted to estimate a channel response of said channel from the received channel modified target response signal (RS), to extract atomic scatter response signals from the estimated channel response of said channel and to match the extracted atomic scatter response signals with template scatterers stored in a memory (3) of said apparatus (1) to classify the target (2).

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 17 18 1047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARGARIT G ET AL: "Exploitation of Ship Scattering in Polarimetric SAR for an Improved Classification Under High Clutter Conditions", IEEE TRANSACTIONS ON GEOSCIENCE AND REMOTE SENSING, IEEE SERVICE CENTER, PISCATAWAY, NJ, US, vol. 47, no. 4, 1 April 2009 (2009-04-01), pages 1224-1235, XP011253232, ISSN: 0196-2892 * abstract; figure 8 * | 1-15 | INV. G01S7/41 |
| X | CHEN JIEHONG ET AL: "Backscattering Feature Analysis and Recognition of Civilian Aircraft in TerraSAR-X Images", IEEE GEOSCIENCE AND REMOTE SENSING LETTERS, IEEE SERVICE CENTER, NEW YORK, NY, US, vol. 12, no. 4, 1 April 2015 (2015-04-01), pages 796-800, XP011564820, ISSN: 1545-598X, DOI: 10.1109/LGRS.2014.2362845 [retrieved on 2014-11-19] * abstract; figures 4,5 * | 1-15 | |
| X | US 7 289 060 B1 (ABATZOGLOU THEAGENIS J [US] ET AL) 30 October 2007 (2007-10-30) * abstract * | 1,11 | TECHNICAL FIELDS SEARCHED (IPC) G01S |
| X | US 8 872 693 B1 (MALAS JOHN A [US] ET AL) 28 October 2014 (2014-10-28) * abstract; figures 12a,12b,13 * | 1,11 | |

The present search report has been drawn up for all claims

| Place of search | Date of completion of the search | Examiner |
|---|---|---|
| Munich | 7 March 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 18 1047

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2018

| Patent document cited in search report | | Publication date | Patent family member(s) | Publication date |
|---|---|---|---|---|
| US 7289060 | B1 | 30-10-2007 | NONE | |
| US 8872693 | B1 | 28-10-2014 | NONE | |

EPO FORM P0459

For more details about this annex : see Official Journal of the European Patent Office, No. 12/82